# EUROPEAN PATENT SPECIFICATION

(11) **EP 1 221 082 B1**
(45) Date of publication and mention of the grant of the patent: **30.07.2003**
(21) Application number: 00988992.4
(22) Date of filing: 15.09.2000
(51) Int. Cl.: G06F 3/00

(54) **USE OF ENGLISH PHONETICS TO WRITE NON-ROMAN CHARACTERS**
VERWENDUNG VON ENGLISCHER PHONETIK ZUM SCHREIBEN VON NICHT-ROMANISCHEN ZEICHEN
UTILISATION DE LA PHONETIQUE ANGLAISE POUR ECRIRE AVEC DES CARACTERES NON ROMAINS

(30) Priority: 17.09.1999 US 398482
(43) Date of publication of application: 10.07.2002
(73) Proprietor: Webdunia.Com (India) Ltd, Indore 452 001, Madhya Pradesh (IN)
(72) Inventor: CHHAJLANI, Vinay, Indore 452 009, Madhya Pradesh (IN)
(74) Representative: Cheyne, John Robert Alexander Mackenzie
(86) International application number: IN0000089
(87) International publication number: WO01020435

(56) References cited:
- WO-A-98/25252
- US-A- 5 640 587
- PATENT ABSTRACTS OF JAPAN vol. 017, no. 348 (P-1566), 30 June 1993 (1993-06-30) & JP 05 046593 A (MATSUSHITA ELECTRIC IND CO LTD), 26 February 1993 (1993-02-26)
- PATENT ABSTRACTS OF JAPAN vol. 1999, no. 04, 30 April 1999 (1999-04-30) & JP 11 025082 A (JUST SYST CORP), 29 January 1999 (1999-01-29) & US 5 999 951 A 7 December 1999 (1999-12-07)
- SINHA R M K ET AL: "Machine transliteration from Roman to Devanagari and Devanagari to Roman" JOURNAL OF THE INSTITUTION OF ELECTRONICS AND TELECOMMUNICATION ENGINEERS, NOV. 1984, INDIA, vol. 30, no. 6, pages 243-245, XP000991333 ISSN: 0377-2063
- "INTELLIGENT COMPUTER KEYBOARD FOR ENTERING TEXTS OF SINHALESE AND OTHER SIMILAR LANGUAGES" IBM TECHNICAL DISCLOSURE BULLETIN,US,IBM CORP. NEW YORK, vol. 35, no. 6, 1 November 1992 (1992-11-01), pages 24-27, XP000314045 ISSN: 0018-8689

## Description

### BACKGROUND OF THE INVENTION

### Technical Field of the Invention

The present invention relates generally to computer system input / output, and more particularly to a system, method, and apparatus for writing non-Roman characters using a Roman character keyboard.

### Description of Related Art

The primary source of textual inputs to a computer system is a keyboard. The keyboard is a useful tool in permitting users to create textual documents, such as desktop publications and E-mail messages. The words of the English language are made up of 26 characters, known collectively as the Roman character set. Therefore, the user can add English words to a document by sequentially typing the Roman characters making up the words. Users can also create textual documents in other languages (e.g., French, Spanish) which include the Roman character set in the same manner.

Creating text in a language which does not use the Roman character set is more complex. The text in languages such as Hindi, Chinese, Japanese, and Arabic, to name a few, use different language-specific character sets. One possible solution is to reconfigure the keyboard for the language-specific character set. This has generally been implemented by using a software driver which reconfigures the keyboard to correlate to different character sets. However, this approach has a number of drawbacks. Reconfiguration of the keyboard requires a user to undergo a learning period before information input proficiency is reached. Additionally, reasonable typing speeds have only been achieved with languages, such as Greek and Russian, which use character sets which have almost a one-to-one character correlation with the Roman character set. Languages such as Chinese and Japanese have several thousand different characters in their respective character sets. Furthermore, in Hindi and other Indian languages, a single character is often a combination of symbols. For the foregoing reasons, reconfiguring the keyboard to a language-specific character set is disadvantageous and a complex solution to this problem.

A number of other methods have been developed which permit writing Chinese characters using a Roman character keyboard. In U.S. Patent 5,079,702, Ho describes a word processor wherein desired Chinese characters are selected by typing English characters preassigned to represent the consonant and vowel sounds of the Chinese characters, followed by a selection of symbol keys representing calligraphic strokes of the Chinese character. The user must, however, have substantial familiarity with the Chinese character set in order to select the symbol keys representing the calligraphic strokes. Additionally, the coding scheme described in Ho provides 15,640 possible representations which are required in order to uniquely represent each of the 10,000 Chinese characters. However, different users may use slightly different English representations of the Chinese characters when they are typing phonetically. While Ho's coding scheme of 15,640 possible representations is sufficient to uniquely represent each of the 10,000 Chinese characters, the coding scheme does not provide alternative representations which different users may select.

In U.S. Patent 5,047,932 issued to Hsieh there is described a method for coding the input of the Chinese characters from a keyboard according to the sounds and tones thereof. Hsieh, however, requires a hard-coded memory module as well as the use of codes which are only partially phonetically based. Therefore, a user must undergo a considerable learning period before, information input proficiency is reached. Additionally, the user must have substantial familiarity with the Chinese character set in order to select the symbol keys representing the tones.

In U.S. Patent 5,893,133 issued to Chen there is described a keyboard for a system and method for processing Chinese language text using diacritics. Chen, however, requires either a specialized non-standard keyboard or a reconfigured keyboard. Therefore, a user must undergo a considerable learning period before information input proficiency is reached. Additionally, the user must have substantial familiarity with the Chinese character set in order to select the symbol keys representing the diacritics.

In WO 98 25252 there is described a method and system for inputting and conversion of Braille into character representations. The system attempts to match a user input to at least one entry in a database. If the system does not find a match, then the input is reduced in size, and another attempt is made to find a match. The process of reducing the input is repeated until a match is found in the database.

In JP 05 046593 there is described a system to reconvert Roman characters into KANA (Japanese syllabary). A correspondence database has a Roman-character-to-KANA conversion table for determining the proper KANA symbol. The correspondence of one KANA character to Roman characters can be known by using a Roman character sectioning database, allowing the KANA characters to be deleted in one-characters units and reconverted into the Roman characters.

In JP 11 025082 there is described a system for accelerating and fixing a response to a character string input in the system. An input character string created by a client is displayed in Roman characters and is transmitted from the client to a server. The server processes the successively transmitted input character string to obtain, for example, a KANA character string. The KANA character string is transmitted back to the client from the server in order to display the KANA character string to the client.

In "Machine Transliteration From Roman to Devanagari and Devanagari to Roman", by Sinha RMK et al, Journal of the Institution of Electronics and Telecommunication Engineers, November 1984, India, vol. 30, no. 6, pages 243- 245, there is described a system for design and implementation of machine transliteration from Roman to Devanagari and vice-versa. Roman characters are grouped into twelve categories depending upon their phonetic correspondences with Devanagari. The Roman character string is transformed to a linearized Devanagari representation by using a state transition table. Devanagari to Roman conversion is primarily table driven, however, a number of heuristics are used to obtain a mor acceptable form.

In U.S. Patent No. 5,640,587, issued to Object Technology Licensing Corp, there is described a system for transliterating a text string from a first language to a second language using transliterator objects, each having a set of transliteration rules in a preferred order. Each of the transliteration rules has a test string and a replacement string. Each test string for each transliteration rule is compared to each of the characters in the text string, and if a match is found, the text string is replaced with the replacement string.

In "Intelligent Computer Keyboard for Entering Texts of Sinhalese and Other Similar Languages", IBM Technical Disclosure Bulletin, vol. 35, no. 6, 1st November 1992, Pages 24-27, there is described a method which allow entering a native language text in Latin characters using a standard keyboard and pronouncing the words in a manner similar to the English language. Words are tokenized into sounds that would be represented as one literal each. Once the words are tokenized, three mechanisms are used, depending on the length of the token. The tokens having the length of one character are stand-alone vowels, and the generation of the literal is done by the computer. The tokens having a length of two or three characters are processed to assemble the literal using basic elements.

Each of the foregoing systems are disadvantageous because the user must have substantial familiarity with the non-Roman character set and a considerable learning period is required before proficiency of use can be achieved. Additionally, because each of the foregoing systems require either specialized hardware or low level software, the systems are unsuitable for use in distributed computing environments, such as the World Wide Web.

It would therefore be advantageous if a user without substantial familiarity of the non-Roman character set could proficiently create documents in that non-Roman character set language using a Roman character set without enduring a long learning period.

It would also be advantageous if a user could write textual documents using a Roman character set in a distributed computing environment.

### BRIEF DESCRIPTION OF THE DRAWINGS

For a more complete understanding of the present invention, reference is made to the following Detailed Description taken in conjunction with the accompanying drawings wherein:
FIGURE 1 is a block diagram describing an exemplary hardware environment wherein the present invention can be practiced;
FIGURE 2 is a block diagram of the software components of the present invention;
FIGURE 3 is a block diagram of an exemplary graphical user interface for the present invention;
FIGURE 4 is a block diagram of exemplary transliteration databases for the present invention;
FIGURE 5 is a flow chart describing the operation of the present invention;
FIGURE 6 is a first embodiment of the present invention in a distributed computing environment; and
FIGURE 7 is a second embodiment of the present invention in a distributed computing environment.

### SUMMARY OF THE INVENTION

The present invention is directed to a system, method, and apparatus which permits users to create text documents using a particular non-Roman character set, with a Roman character keyboard. A user creating a document in a non-Roman character set language phonetically types each word using the Roman characters which mimic the sounds of the word into an input graphical user interface. The typed characters are searched for in a transliteration database which correlates clusters of Roman characters which mimic the sounds of the characters in the non-Roman character set to the respective corresponding non-Roman characters. The non-Roman character corresponding to the typed characters is then printed and/or displayed in an output graphical user interface.

Additionally, an embodiment of the present invention is illustrated in a two-tier distributed computing environment, wherein application and transliteration databases are stored at a server. A user can download the application and transliteration databases at a remote client computer to create non-Roman text documents on the client computer.

Further, an embodiment of the invention is presented in a three-tier distributed computing environment, wherein the application is stored at a first application server and the transliteration databases are stored at a second database server. A user can create non-Roman text documents at a remote client computer by downloading the application. When the application is run on the client computer, the application correlates the Roman typed characters with the corresponding non-Roman characters by sending a query to the transliteration databases at the database server over a communication medium.

The invention is defined according to claim 1 (method), claim 7 (system) and claim 15 (computer usable medium).

### DETAILED DESCRIPTION OF PREFERRED EMBODIMENTS

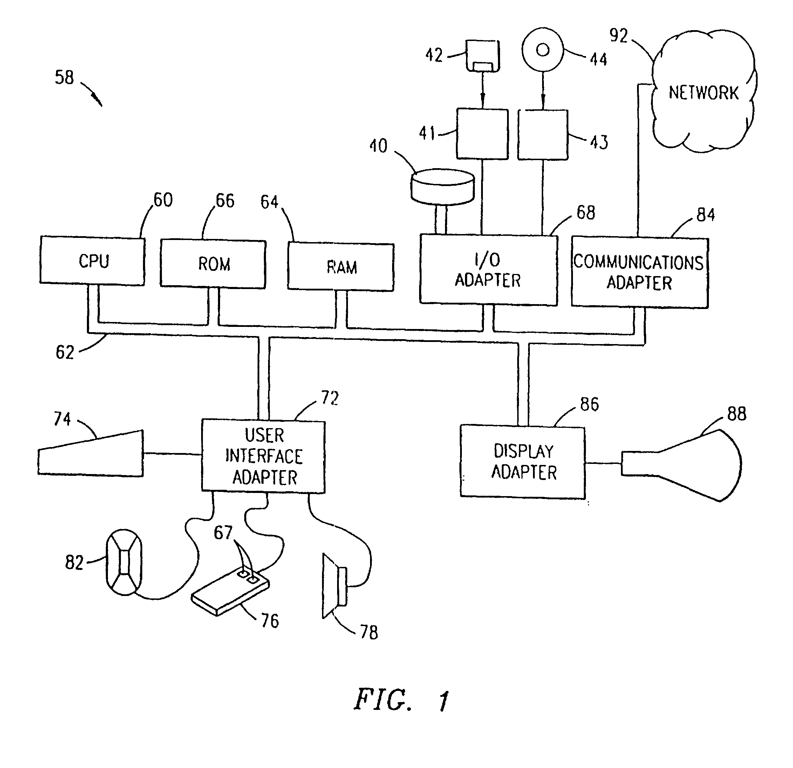

Referring now to FIGURE 1, a representative hardware environment for a computer system 58 for practicing the present invention is depicted. A CPU 60 is interconnected via system bus 62 to random access memory (RAM) 64, read only memory (ROM) 66, an input/output (I/O) adapter 68, a user interface adapter 72, a communications adapter 84, and a display adapter 86. The input/output (I/O) adapter 68 connects peripheral devices such as a hard disc drive 40, a floppy disc drive 41 for reading removable floppy discs 42, and an optical disc drive 43 for reading a removable optical disc 44 (such as a compact disc or a digital versatile disc) to the bus 62. The user interface adapter 72 connects devices such as a Roman character keyboard 74, a mouse 76 having a plurality of buttons 67, a speaker 78, a microphone 82, and/or other user interfaces devices such as a touch screen device (not shown) to the bus 62. The display adapter 86 connects a monitor 88 to the bus 62. The communications adapter 84 connects the computer system to a data processing network 92. The data processing network 92 may include any number of other computer systems, such as another computer system 58 or a server, as well as mass storage elements such as another hard disc drive 40, or another optical disc drive 43 for reading optical discs 44.

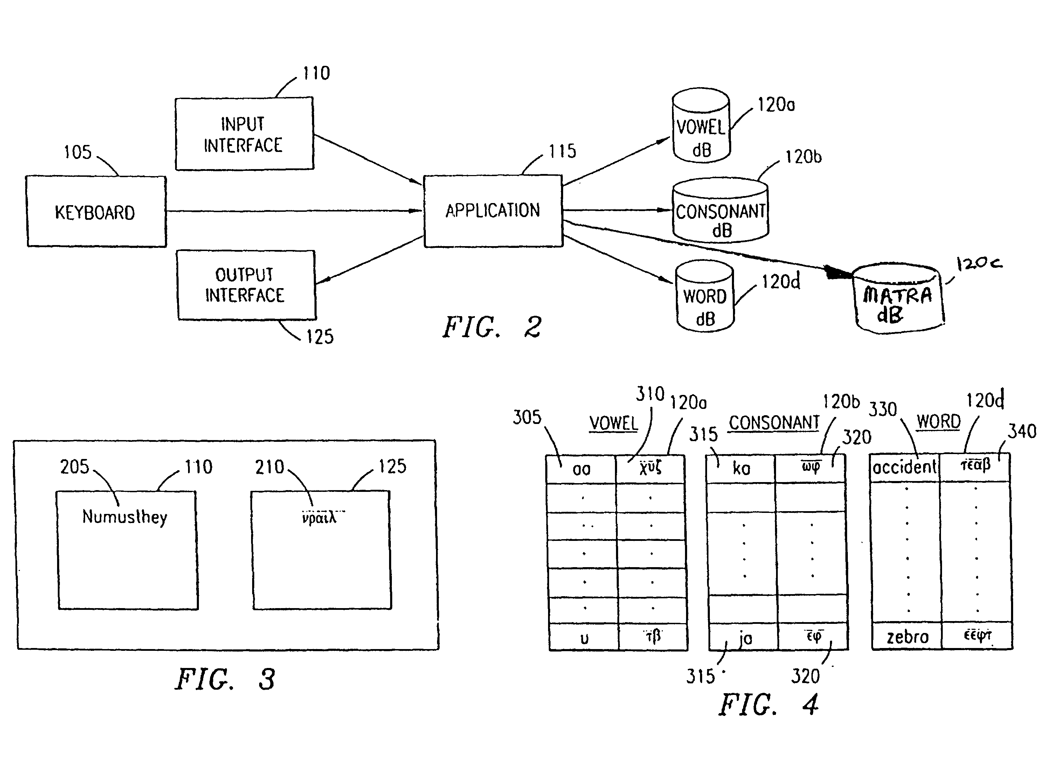

Referring now to FIGURE 2, there is illustrated a block diagram of an exemplary software architecture for the present invention. The present invention permits a user to create text documents written in a particular non-Roman character set, using the Roman character keyboard 105. A user creating a document in a non-Roman character set phonetically types each word using the Roman characters which mimic the sound of the word. An input graphical user interface ( GUI ) 110 can be provided on the monitor 88 to prompt and otherwise assist the user in typing the Roman characters.

The Roman characters typed by the user are received by an application program 115 for converting the typed Roman characters to the mimicked non-Roman characters. The application program 115 searches for the received Roman characters (and/or character groupings) in transliteration databases 120. The transliteration databases 120 correlate clusters of Roman characters which mimic non-Roman characters with the respective non-Roman character representations. The application program 115 retrieves the non-Roman character corresponding to the typed Roman characters. The retrieved non-Roman character is then printed and/or displayed via an output GUI 125 on the monitor 88.

The application program 115 and transliteration databases 120 can be implemented as sets of instructions and data resident in the random access memory 64 of one or more computer systems 58 configured generally as described in FIGURE 1. Until required by the computer system 58, the set of instructions may be stored in another computer readable memory, for example in a hard disc drive 40, or in removable memory such as an optical disc 44 for eventual use in an optical disc drive 43, or a floppy disc 42 for eventual use in a floppy disc drive 41. Those skilled in the art will note that because computer system 58 is connected to data processing network 92, the random access memory 64, the hard disc drive 40, the floppy disc drive 41, the floppy disc 42, the optical disc drive 43, and the optical disc 44, may reside within the data processing network 92, and therefore, need not be directly connected to the CPU 60 via the bus 62. Execution of the set of instructions causes the input and output GUI 110, 125 to appear on the monitor 88, as shown in FIGURE 3. Referring now to FIGURE 3, there is illustrated a block diagram of an exemplary input and output GUI 110, 125 for the present invention, as would appear on the screen of a monitor 88. The input and output GUI 110, 125 can each comprise what is known in the art as a window, or alternatively, a reserved area of the display screen of the monitor 88. In another embodiment, the input and output GUI 110, 125 can form a portion of a browser page written in HyperText Markup Language (HTML), commonly known as an HTML page.

The input GUI 110 prompts the user to enter Roman characters mimicking the sounds of the words the user wishes to write. After each user keystroke, the application program 115 displays the Roman character 205 corresponding to the selected key in the input GUI 110. The output GUI 125 receives and displays the non-Roman characters 210 corresponding to the Roman characters 205 displayed in the input GUI 110.

Referring now to FIGURE 4, there is illustrated a block diagram of exemplary transliteration databases 120 for the present invention. The transliteration databases 120 include a vowel transliteration database 120a, a consonant transliteration database 120b, a Matra transliteration database 120c and a word transliteration database 120d.

The vowel transliteration database 120a correlates clusters of Roman characters 305 which mimic non-Roman characters with vowel sounds, with the respective non-Roman vowel characters 310. The consonant transliteration database 120b correlates clusters of Roman characters 315 which mimic non-Roman characters with consonant sounds, with the respective non-Roman consonant characters 320. The Matra transliteration database 120c correlates clusters of Roman characters which mimic non-Roman characters with both consonant and vowel sounds with the respective non-Roman character. A "Matra" is used to denote the merging of a vowel with a consonant, commonly occurring in Indian subcontinent languages. Exemplary tables correlating Roman characters which mimic Hindi, Gujarati, and Marathi characters with vowel, consonant, and combined consonant/vowel sounds are provided below as Appendix 1:

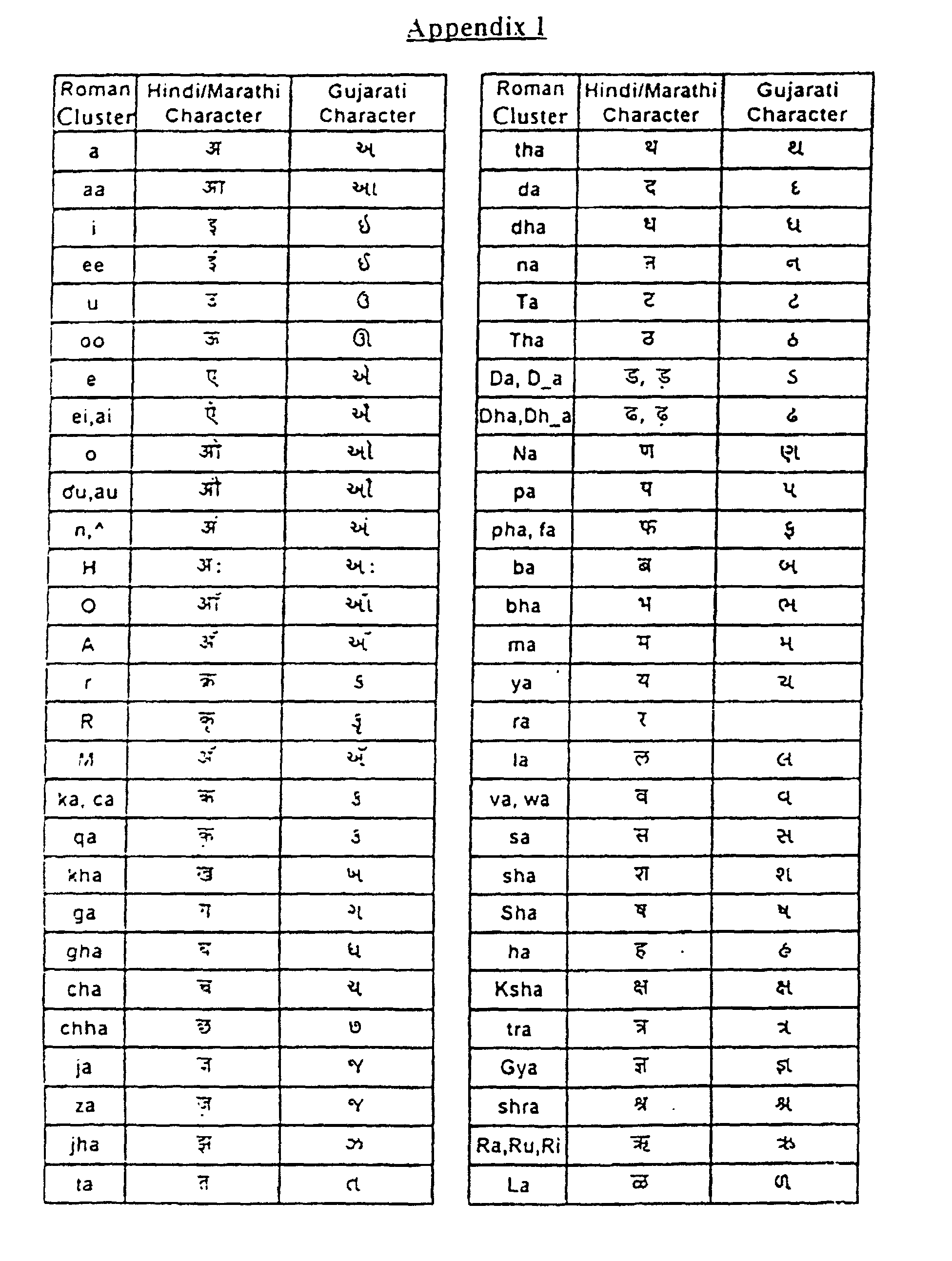

It is noted that a number of English words are used literally in other languages (known as "broken English"). Accordingly, the transliteration databases 120 include a word transliteration database 120d. The word transliteration database 120d correlates the English words used literally with the non-Roman text representing the entire word. The foregoing permits the user to simply type the entire word using English spelling 330 and the corresponding non-Roman text 340 representing the entire word is displayed on the output GUI 125. Exemplary tables correlating English words with Hindi, Gujarati, and Marathi text are provided below as Appendix 2:

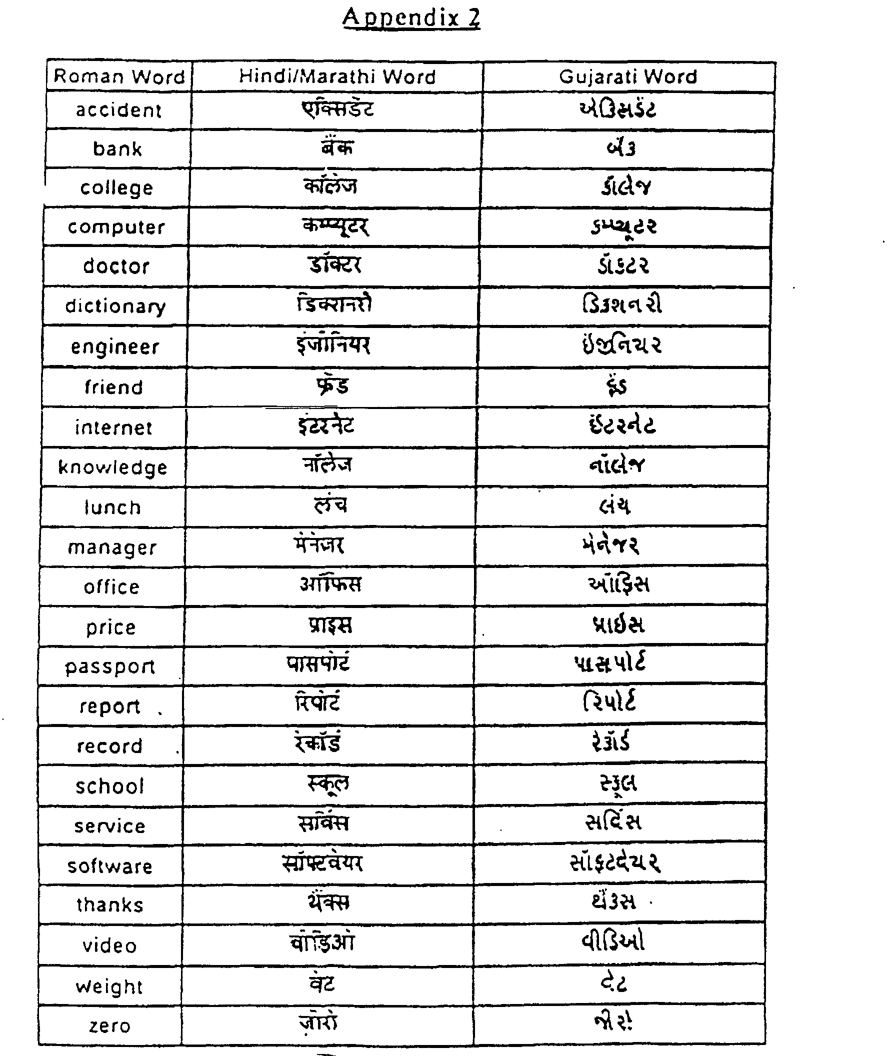

The transliteration databases 120 are used to convert the Roman characters into non-Roman text. As the user phonetically types the sounds of each word using the Roman characters, the Roman characters are stored in a buffer memory (not shown). When the user types, for example, a cursor key (as for example, the space bar, delete, backspace, tab, or an arrow key) the contents of the buffer are searched for in the transliteration databases 120. First, the entire contents of the buffer are searched in the transliteration databases 120, and if found, the corresponding non-Roman character(s) are printed to the output GUI 125. If the entire contents of the buffer are not found, the contents of the buffer are searched in a sequential manner. The cluster before the first occurrence of a vowel is extracted from the buffer contents. Starting at the first character in the buffer, the non-Roman character corresponding to the Roman character set which matches the most consecutive characters in the buffer is selected and printed and/or displayed to the output GUI 125. This process is repeated for the entire buffer contents. The process is context-sensitive so as to encompass the special character formations where consonants and vowels merge with each other.

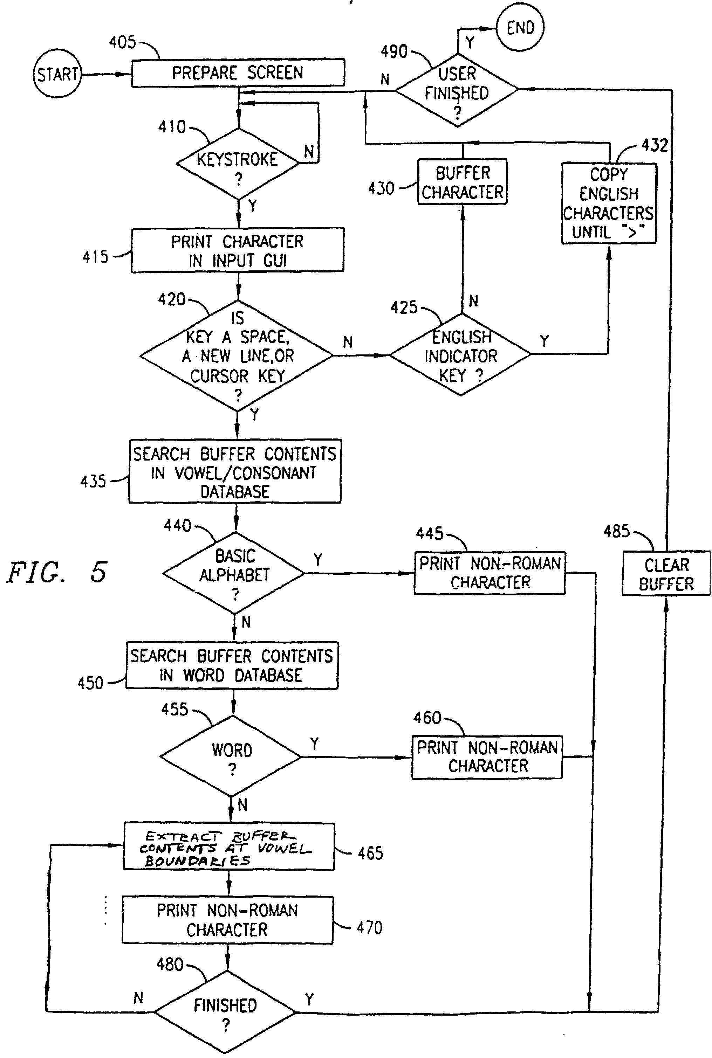

Referring now to FIGURE 5, a flow diagram describing the operation of the application program 115 is illustrated. The application program 115 starts at 405 by displaying the input GUI 110 and the output GUI 125 (step 405) on the monitor 88. After displaying the input GUI 110 and the output GUI 115, the application program waits (step 410) for keystrokes, allowing the user to begin phonetically typing the sounds which make up words using the Roman character keyboard 74. When the user types a keystroke, the Roman character or action corresponding thereto is printed into the input GUI 110 (step 415).

At step 420, a determination is made whether the Roman character is a space character, a new line character, or a cursor key (the arrow keys, page up/down, insert, delete, or backspace). Where the Roman character is not a cursor key, a determination is made whether the Roman character is a Roman indicator key "<" (step 425). The Roman indicator is a predetermined indicator, e.g., "<", which permits users to mix Roman text with non-Roman text. When the Roman indicator is received, the Roman characters are copied to the output GUI 125 until a Roman indicator end, e.g., ">", is received (step 432). After the Roman indicator end is received, the application 115 awaits the next stroke (step 410). Where the Roman character is not a Roman indicator key, the character is placed in a buffer (step 430) and the application program awaits the next keystroke (step 410). The process (steps 410-432) is repeated until a cursor key is received.

Where the Roman character entered during step 410 is cursor key, the application 115 searches (step 435) for the buffer contents in the vowel, consonant, and Matra databases 120a, 120b, 120c. If the buffer contents are found (step 440) in the vowel, consonant, or Matra database 120a, 120b, 120c the non-Roman character corresponding to the buffer contents is printed to the output GUI 125 (step 445). If the buffer contents are not found in the vowel, consonant, or Matra databases 120a, 120b, 120c, the word transliteration database 120d is searched (step 450). If the buffer contents are found in the word transliteration database 120d (step 455), the non-Roman word representation is printed to the output GUI 125 (step 460). If the buffer contents cannot be found in the word transliteration database 120d, the buffer contents are transliterated in a sequential fashion as described below.

The cluster before the first occurrence of a vowel is extracted from the buffer contents (step 465). Starting with this cluster, the non-Roman character in the vowel, consonant, or Matra database 120a, 120b, 120c corresponding to the Roman character set which matches the most consecutive characters in the cluster is selected and printed and/or displayed to the output GUI 125 (step 470). The matched buffer characters are then removed from the buffer (step 475). Steps 465-475 are repeated until the entire contents of the buffer have been matched (step 480) and associated non-Roman characters printed (step 470) in the output GUI 125.

After the non-Roman character(s) have been printed to the output GUI 125 in steps 445, 460, or 480, the buffer is cleared (step 485). A determination is then made whether the user has finished typing (step 490). Those skilled in the art will recognize that the foregoing determination can be made in a number of ways, such as selection of an object using the mouse 76. The foregoing steps (steps 410-490) are repeated until the user indicates that they are finished at step 490.

As noted above, the application 115 and transliteration databases 120 can be stored within a computer system 58, allowing a user at that computer system 58 to write non-Roman text documents. However, the recent popularity of the Internet and the World Wide Web provide a convenient distributed computing environment available to millions around the world. By implementing the application 115 and transliteration databases 120 in a distributed computing environment, a user can write non-Roman text documents at any appropriately connected computer system 58.

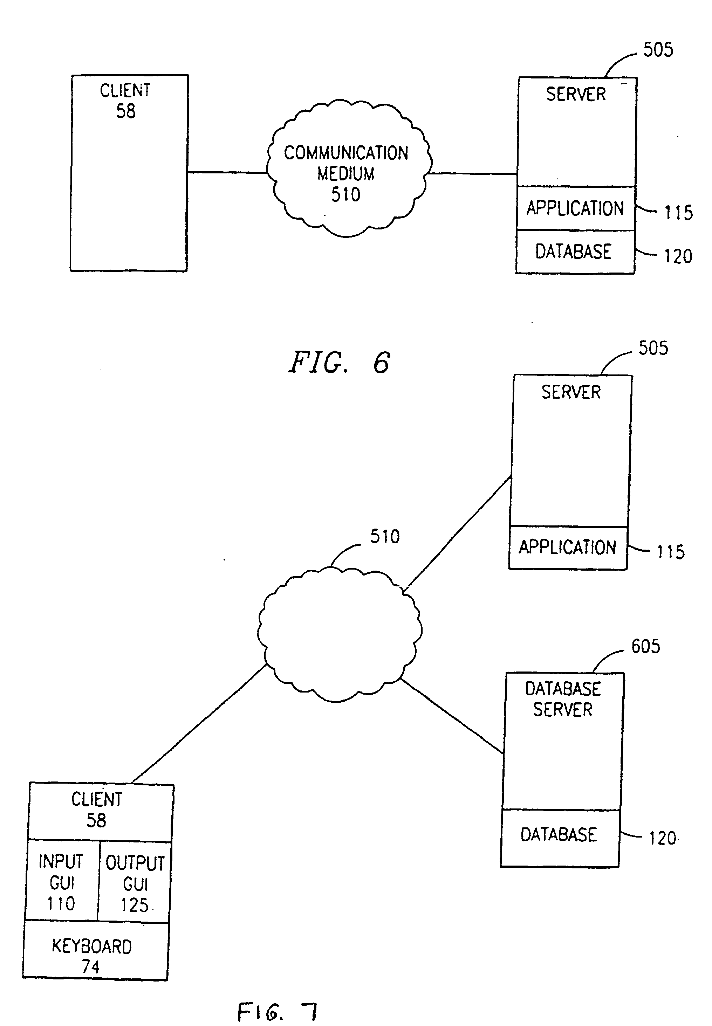

Referring now to FIGURE 6, there is illustrated a block diagram of an embodiment of the present invention in a two-tier distributed computing environment. The distributed computing environment includes a server 505 that is used to handle common services, such as databases, voice mail, E-mail, facsimile, as well as user applications such as application 115. The foregoing functions are made accessible to one or more computer systems 58, referred to in this context as client computers 58. Client computers 58 access the server 505 via a communication medium 510 which can include a telephone connection, a coaxial cable, the Internet, or a combination thereof.

Storing the application 115 and the transliteration databases 120 at the server 505 is advantageous because the application 115 can be accessed by numerous client computers 58 located about a large geographic area. Additionally, writing and storing the application 115 and transliteration databases 120 using a machine independent programming language eliminates constraints on client computers 58 due to manufacturing differences. The application 115 and associated transliteration databases 120 can be downloaded from the server 505 and run on the client computer 58, using a program known as a browser.

The foregoing embodiment permits a user to access the application 115 and transliteration databases 120 from a remote location. However, the process of downloading can be time consuming where the transliteration databases are large, particularly if the communication medium 510 includes a telephone line. For a large transliteration database 120, an improvement in efficiency can be realized by managing the transliteration databases at the server end.

Referring now to FIGURE 7, there is illustrated a block diagram of an embodiment of the present invention in a three-tier distributed computing environment. The distributed computing environment includes the server 505, the client computer 58, and a database server 605 interconnected via the communications medium 510. Although illustrated as different servers, the server 505 and the database server 605 can be co-located. The application 115 is stored at the server 505 and the transliteration databases are stored at the database server 605. In contrast to the two-tier distributed computing environment shown in FIGURE 6, the application 115 is executed at the server 505. However, the application 115 causes the input GUI 110 and output GUI 125 to appear on the monitor 88 of the client computer 58. The application 115 receives inputs from the Roman character keyboard 74 at the client, accesses the transliteration databases 120 at the database server 605 by sending database queries (e.g., steps 435, 450, and 465), and retrieving results (e.g., steps 445, 460, and 470), over the communication medium 510.

## Claims

1. A method for writing a text document with a non-Roman character set comprising a plurality of non-Roman characters, said method comprising the step of receiving inputs from a keyboard (105) comprising a plurality of keys, wherein each of said plurality of keys correspond to a particular Roman character; and further
**characterized by** the steps of:
searching a database (120) for said received inputs, said database (120) storing each of said plurality of non-Roman characters and a plurality of sets of one or more Roman characters, each of said plurality of sets of one or more Roman characters corresponding to a particular one of said plurality of non-Roman characters, wherein each of said plurality of sets of one or more Roman characters phonetically represents said corresponding particular non-Roman character; and
placing said particular non-Roman character corresponding to said received inputs into said text document in response to finding said received inputs in said database (120).

2. The method of claim 1, wherein said receiving step further comprises the steps of:
receiving keystrokes from said keyboard (105) wherein said keystrokes correspond to particular Roman characters; and
placing said particular Roman characters corresponding to said keystrokes in a buffer memory.

3. The method of claim 2, wherein said step of searching further comprises the step of:
searching a database (120) for said Roman characters placed in said buffer, in response to receiving a keystroke corresponding to a cursor key during said receiving step.

4. The method of claim 2 wherein said received inputs are not found in said database (120), and further comprising the steps of:
searching said database (120) for a particular one of said plurality of sets, wherein said particular one of said plurality of sets matches a portion of said Roman characters placed in said buffer;
placing said particular non-Roman character corresponding to said particular set into said text document; and
removing said portion of Roman characters from said buffer.

5. The method of claim 1, wherein said database (120) comprises a vowel transliteration database (120a), a consonant transliteration database (120b), and a word transliteration database (120d), and a wherein said step of searching comprises the steps of:
searching for said received inputs in the vowel transliteration database (120a) and the consonant transliteration database (120b);
placing said particular non-Roman character corresponding to said received inputs into said text document in response to finding said character during said searching step; and
searching for said received inputs in the word transliteration database (120d) in response to not finding said character during searching step.

6. The method of claim 1, wherein said non-Roman characters are those used in a language selected from the group consisting of Hindi, Gujarati, and Marathi.

7. A transliteration computer system for writing text documents with a non-Roman character set comprising a plurality of non-Roman characters, said system comprising
a keyboard (105) comprising a plurality of keys for providing inputs to said system, wherein each of said plurality of keys corresponds to a particular Roman character, and
**characterized by**:
a database (120) for storing each of said plurality of non-Roman characters and a plurality of sets of one or more Roman characters, each of said plurality of sets of one or more Roman characters corresponding to a particular one of said plurality of non-Roman characters, and wherein each of said plurality of sets of one or more Roman characters phonetically represents said corresponding particular non-Roman character;
an application program (115) within said transliteration computer system for searching said database (120) for said received inputs; and
output means for processing said non-Roman character corresponding to said received inputs in response to finding said Roman characters represented by said received inputs are found in said database (120).

8. The transliteration computer system of claim 7, wherein said keyboard (105) is adapted to receive keystrokes corresponding to particular Roman characters, and further comprising:
a buffer memory for storing particular Roman characters corresponding to said keystrokes.

9. The system of claim 8, wherein said application program (115) includes means for searching said database (120) for said particular Roman characters placed in said buffer, in response to said keyboard (105) providing a keystroke corresponding to a cursor key.

10. The system of claim 7, wherein said database (120) comprises a vowel transliteration database (120a), a consonant transliteration database (120b), and a word transliteration database (120d).

11. The system of claim 7, wherein said output means comprises a monitor (88).

12. The system of claim 7, wherein said output means comprises a graphical user interface (125) displayable on a monitor (88).

13. The system of claim 7, wherein said keyboard (105) and said output means form a portion of a client computer (58) and said application program (115) is stored at a server (505) which is connected to said client computer (58) by a communication medium (510).

14. The system of claim 13, wherein said database (120) is stored at a database server (605), and wherein said client computer (58), said server (505), and said database server (605) are interconnected by said communication medium (510).

15. An article of manufacture comprising a computer usable medium having computer readable program code means embodied thereon for writing a text document with a non-Roman character set comprising a plurality of non-Roman characters in a computer system having a monitor (88), and memory, the computer readable program code means in said article of manufacture comprising computer readable program code means for:
receiving inputs from a keyboard (105) comprising a plurality of keys, wherein each of said plurality of keys correspond to a particular Roman character; and
**characterized by** the steps of:
searching a database (120) for said received inputs, said database (120) storing each of said plurality of non-Roman characters and a plurality of sets of one or more Roman characters, each of said plurality of sets of one or more Roman characters corresponding to a particular one of said plurality of non-Roman characters, wherein each of said plurality of sets of one or more Roman characters phonetically represents said corresponding particular non-Roman character; and
placing said particularnon-Roman character corresponding to said received inputs into said text document in response to finding said received inputs in said database (120).

16. The article of manufacture of claim 15, wherein said computer readable program code further comprises means for:
receiving keystrokes from said keyboard (105); and
placing said particular Roman characters corresponding to said keystrokes in a buffer in response to said keystrokes corresponding to associated particular Roman characters.

17. The article of manufacture of claim 16, wherein said computer readable program code means for searching further comprises computer readable program code means for:
searching said database (120) for said Roman characters placed in said buffer, in response to receiving a keystroke corresponding to a cursor key by said receiving means.

18. The article of manufacture of claim 16, wherein said computer readable program code further comprises means for:
searching said database (120) for a particular one of said plurality of sets, wherein said particular one of said plurality of sets matches a portion of said Roman characters placed in said buffer in response to not finding said received inputs in said database (120);
placing said particular non-Roman character corresponding to said particular set into said text document; and
removing said portion of Roman characters from said buffer.

19. The article of manufacture of claim 15, wherein said database (120) comprises a vowel transliteration database (120a), a consonant transliteration database (120b), and a word transliteration database (120d), and a wherein said computer readable program code means for searching further comprises computer readable program code means for:
searching for said received inputs in the vowel transliteration database (120a) and the consonant transliteration database (120b);
placing said particular non-Roman character corresponding to said received inputs into said text document in response to finding said character during said searching step; and
searching for said received inputs in the word transliteration database (120d) in response to not finding said character during searching step.

20. The article of manufacture of claim 15 wherein said non-Roman characters are those used in a language selected from the group consisting of Hindi, Gujarati, and Marathi.

## Patentansprüche

1. Verfahren zum Schreiben eines Textdokumentes mit einem nicht-romanischen Zeichensatz, aufweisend eine Anzahl nicht-romanischer Zeichen, wobei das Verfahren den Schritt des Empfangens von Eingaben aus einer Tastatur (105), welche eine Anzahl von Tasten umfasst, beinhaltet, wobei jede aus der Anzahl an Tasten einem speziellen romanischen Zeichen entspricht, **gekennzeichnet durch** die folgenden Schritte:
Suchen einer Datenbank (120) für die empfangenen Eingaben, wobei die Datenbank (120) jedes aus der Anzahl an nicht-romanischen Zeichen und eine Anzahl an Sätzen aus einem oder mehreren romanischen Zeichen speichert, wobei aus jeder der Anzahl an Sätzen aus einem oder mehreren romanischen Zeichen einem speziellen aus der Anzahl an nicht-romanischen Zeichen entspricht, wobei jeder aus der Anzahl an Sätzen aus einem oder mehreren romanischen Zeichen phonetisch das entsprechende spezielle nicht-romanische Zeichen darstellt; und
Anordnen des speziellen nicht-romanischen Zeichens entsprechend der empfangenen Eingaben in dem Textdokument als Antwort auf das Auffinden der empfangenen Eingaben in der Datenbank (120).

2. Verfahren nach Anspruch 1, **dadurch gekennzeichnet, dass** der Empfangsschritt die folgenden Schritte umfasst:
Empfangen von Tastaturanschlägen über die Tastatur (105), wobei die Tastaturanschläge speziellen romanischen Zeichen entsprechen; und
Anordnen der speziellen romanischen Zeichen entsprechend der Tastaturanschläge in einem Pufferspeicher.

3. Verfahren nach Anspruch 2, **dadurch gekennzeichnet, dass** der Suchschritt folgende Schritte umfasst:
Suchen einer Datenbank (120) für die in dem Pufferspeicher angeordneten romanischen Zeichen als Antwort auf den Empfang eines Tastaturanschlages entsprechend einer Cursortaste während des Empfangsschrittes.

4. Verfahren nach Anspruch 2, **dadurch gekennzeichnet, dass** die empfangenen Eingaben nicht in der Datenbank (120) gefunden werden und dass es weiter die folgenden Schritte umfasst:
Durchsuchen der Datenbank (120) nach einem speziellen aus der Anzahl an Sätzen, wobei der spezielle aus der Anzahl an Sätzen einem Teil der romanischen Zeichen entspricht, die in dem Pufferspeicher enthalten sind;
Einfügen des speziellen nicht-romanischen Zeichens entsprechend dem speziellen Satz in das Textdokument; und
Entfernen des Teils der romanischen Zeichen aus dem Pufferspeicher.

5. Verfahren nach Anspruch 1, **dadurch gekennzeichnet, dass** die Datenbank (120) eine Vokal-Transliterationsdatenbank (120a), eine Konsonanten-Transliterationsdatenbank (120b) und eine Wort-Transliterationsdatenbank (120d) umfasst und dass der Suchschritt die folgenden Schritte aufweist:
Suchen in der Vokal-Transliterationsdatenbank (120a) und der Konsonanten-Transliterationsdatenbank (120b) nach den empfangenen Eingaben;
Einfügen des speziellen nicht-romanischen Zeichens entsprechend den empfangenen Eingaben in das Textdokument als Antwort auf das Auffinden des Zeichens während des Suchschrittes; und
Suchen in der Wort-Transliterationsdatenbank (120d) nach den empfangenen Eingaben als Antwort auf das Nichtauffinden des Zeichens während des Suchschrittes.

6. Verfahren nach Anspruch 1, **dadurch gekennzeichnet, dass** die nicht-romanischen Zeichen jene sind, die in einer Sprache verwendet werden, welche aus der Gruppe ausgewählt ist, die aus Hindi, Gujarati und Marathi besteht.

7. Transliterations-Computersystem zum Schreiben von Textdokumenten mit einem nicht-romanischen Zeichensatz, welcher eine Anzahl an nicht-romanischen Zeichen umfasst, wobei das System folgendes aufweist:
eine Tastatur (105), welche eine Anzahl an Tasten aufweist, um Eingaben in das System auszuführen, wobei jede der Anzahl der Tasten einem speziellen romanischen Zeichen entspricht, **gekennzeichnet durch**:
eine Datenbank (120) zum Speichern jedes aus der Anzahl der nicht-romanischen Zeichen und eine Anzahl an Sätzen aus einem oder mehreren romanischen Zeichen, wobei jeder der Anzahl an Sätzen aus einem oder mehreren romanischen Zeichen einem speziellen aus der Anzahl der nicht-romanischen Zeichen entspricht und wobei jeder aus der Anzahl an Sätzen aus einem oder mehreren romanischen Zeichen phonetisch das entsprechende bestimmte nicht-romanische Zeichen darstellt;
ein Anwendungsprogramm (115) innerhalb des Transliterations-Computersystems zum Durchsuchen der Datenbank (120) nach den empfangenen Eingaben; und
Ausgabemittel zum Verarbeiten des nicht-romanischen Zeichens entsprechend den empfangenen Eingaben als Antwort auf das Auffinden der romanischen Zeichen, die **durch** die empfangenen Eingaben dargestellt werden, in der Datenbank (120).

8. Transliterations-Computersystem nach Anspruch 7, **dadurch gekennzeichnet, dass** die Tastatur (105) dafür ausgelegt ist, Tastaturanschläge entsprechend bestimmten romanischen Zeichen zu empfangen, und es des Weiteren folgendes aufweist:
einen Pufferspeicher zum Speichern spezieller romanischer Zeichen entsprechend der Tastaturanschläge.

9. System nach Anspruch 8, **dadurch gekennzeichnet, dass** das Anwendungsprogramm (115) Mittel zum Durchsuchen der Datenbank (120) nach den bestimmten in dem Pufferspeicher enthaltenen romanischen Zeichen als Antwort darauf, dass die Tastatur (105) einen einer Cursortaste entsprechenden Tastenanschlag aufweist, enthält.

10. System nach Anspruch 7, **dadurch gekennzeichnet, dass** die Datenbank (120) eine Vokal-Transliterationsdatenbank (120a), eine Konsonanten-Transliterationsdatenbank (120b) und eine Wort-Transliterationsdatenbank (120d) enthält.

11. System nach Anspruch 7, **dadurch gekennzeichnet, dass** das Ausgabemittel einen Monitor (88) aufweist.

12. System nach Anspruch 7, **dadurch gekennzeichnet, dass** das Ausgangsmittel eine graphische Benutzerschnittstelle (125) aufweist, welche auf dem Monitor (88) darstellbar ist.

13. System nach Anspruch 7, **dadurch gekennzeichnet, dass** die Tastatur (105) und das Ausgabemittel einen Teil eines Clientcomputers (58) bilden und dass das Anwendungsprogramm (115) in einem Server (505) gespeichert ist, welcher mit dem Clientcomputer (58) durch ein Kommunikationsmedium (510) verbunden ist.

14. System nach Anspruch 13, **dadurch gekennzeichnet, dass** die Datenbank (120) in einem Datenbankserver (605) gespeichert ist und dass der Clientcomputer (58), der Server (505) und der Datenbankserver (605) durch das Kommunikationsmedium (510) miteinander verbunden sind.

15. Erzeugnis, aufweisend ein durch Computer benutzbares Medium mit einem computerlesbaren Programmcodemittel, das darauf ausgeführt ist, um ein Textdokument mit einem nicht-romanischen Zeichensatz, welcher eine Anzahl nicht-romanischer Zeichen enthält, in einem Computersystem zu schreiben, welches einen Monitor (88) und einen Speicher enthält, wobei das computerlesbare Programmcodemittel in dem Erzeugnis computerlesbare Programmcodemittel für folgendes umfasst:
Empfangen von Eingaben aus einer Tastatur (105) welche eine Anzahl an Tasten enthält, wobei jede aus der Anzahl der Tasten einem speziellen romanischen Zeichen entspricht; **gekennzeichnet durch** die folgenden Schritte:
Durchsuchen einer Datenbank (120) nach den empfangenen Eingaben, wobei die Datenbank (120) jeden aus der Anzahl der nicht-romanischen Zeichen und eine Anzahl an Sätzen aus einem oder mehreren romanischen Zeichen speichert, wobei jeder aus der Anzahl der Sätze aus einem oder mehreren romanischen Zeichen einem speziellen aus der Anzahl der nicht-romanischen Zeichen entspricht, wobei jeder aus der Anzahl der Sätze aus einem oder mehreren romanischen Zeichen phonetisch das entsprechende spezielle nicht-romanische Zeichen darstellt; und
Einfügen des speziellen nicht-romanischen Zeichens entsprechend der empfangenen Eingaben in das Textdokument als Antwort auf das Auffinden der empfangenen Eingaben in der Datenbank (120).

16. Erzeugnis nach Anspruch 15, **dadurch gekennzeichnet, dass** der computerlesbare Programmcode des Weiteren Mittel für folgendes umfasst:
Empfangen von Tastaturanschlägen über die Tastatur (105); und
Eingeben der speziellen romanischen Zeichen entsprechend den Tastaturanschlägen in einen Pufferspeicher als Antwort auf die Tastaturanschläge entsprechend den zugehörigen speziellen romanischen Zeichen.

17. Erzeugnis nach Anspruch 16, **dadurch gekennzeichnet, dass** das computerlesbare Programmcodemittel zum Suchen des Weiteren computerlesbare Programmcodemittel für folgendes umfasst:
Durchsuchen der Datenbank (120) nach den romanischen Zeichen, die in den Pufferspeicher eingegeben sind, als Antwort auf den Empfang eines Tastaturanschlags entsprechend einer Cursortaste durch das Empfangsmittel.

18. Erzeugnis nach Anspruch 16, **dadurch gekennzeichnet, dass** der computerlesbare Programmcode des Weiteren Mittel für folgendes umfasst:
Suchen in der Datenbank (120) nach einem speziellen aus der Anzahl an Sätzen wobei der spezielle aus der Anzahl an Sätzen einem Teil der romanischen Zeichen entspricht, die in dem Pufferspeicher abgelegt sind, als Antwort auf das Nichtauffinden der empfangenen Eingaben in der Datenbank (120);
Einfügen des speziellen nicht-romanischen Zeichens entsprechend dem speziellen Satz in das Textdokument; und
Entferen des Teils der romanischen Zeichen aus dem Pufferspeicher.

19. Erzeugnis nach Anspruch 15, **dadurch gekennzeichnet, dass** die Datenbank (120) eine Vokal-Transliterationsdatenbank (120a) eine Konsonanten-Transliterationsdatenbank (120b) und eine Wort-Transliterationsdatenbank (120d) umfasst und dass das computerlesbare Programmcodemittel zum Suchen des Weiteren computerlesbare Programmcodemittel für folgendes aufweist:
Suchen nach den empfangenen Eingaben in der Vokal-Transliterationsdatenbank (120a) und der Konsonanten-Transliterationsdatenbank (120b) ;
Einfügen des speziellen nicht-romanischen Zeichens entsprechend den empfangenen Eingaben in das Textdokument als Antwort auf das Auffinden des Zeichens während des Suchschrittes; und
Suchen nach den empfangenen Eingaben in der Wort-Transliterationsdatenbank (120d) als Antwort auf das Nichtauffinden des Zeichens während des Suchschrittes.

20. Erzeugnis nach Anspruch 15, **dadurch gekennzeichnet, dass** die nicht-romanischen Zeichen jene sind, welche in einer Sprache verwendet werden, die aus der Gruppe ausgewählt ist, die aus Hindi, Gujarati und Marathi besteht.

## Revendications

1. Méthode pour écrire un document de texte avec un jeu de caractères non latins comprenant une pluralité de caractères non latins, ladite méthode comprenant l'étape de réception d'entrées depuis un clavier (105) comprenant une pluralité de touches, dans laquelle chacune desdites touches correspond à un caractère latin particulier, et de plus **caractérisé par** les étapes de :
- recherche dans une base de données (120) desdites entrées reçues, ladite base de données (120) stockant chacune desdites pluralités de caractères non latins et une pluralité de jeux d'un ou plusieurs caractères latins, chacune desdites pluralités de jeux de un ou plusieurs caractères latins correspondant à une desdites pluralités de caractères non latins en particulier, où chacune desdites pluralités de jeux de un ou plusieurs caractères latins représente phonétiquement ledit caractère non latin correspondant, et
- placement dudit caractère non latin particulier correspondant aux dites entrées reçues dans ledit document de texte en réponse à la découverte desdites entrées reçues dans ladite base de données (120).

2. Méthode selon la revendication 1, **caractérisée en ce que** ladite étape de réception comprend de plus les étapes de :
- réception de frappes depuis ledit clavier (105) dans lesquelles lesdites frappes correspondent à des caractères latins particuliers, et
- placement desdits caractères latins particuliers correspondant aux dites frappes dans une mémoire-tampon.

3. Méthode selon la revendication 2, **caractérisée en ce que** ladite étape de recherche comprend de plus l'étape de :
recherche dans une base de données (120) desdits caractères latins placés dans ladite mémoire-tampon, en réponse à la réception d'une frappe correspondant à une touche curseur pendant ladite étape de réception.

4. Méthode selon la revendication 2, **caractérisée en ce que** lesdites entrées reçues ne sont pas trouvées dans ladite base de données (120), et, de plus, comprenant les étapes de :
- recherche dans ladite base de données (120) d'une desdites pluralités de jeux en particulier, où cette pluralité de jeux particulière correspond à une portion desdits caractères latins placés dans ladite mémoire-tampon,
- placement dudit caractère non latin correspondant audit jeu particulier dans ledit document de texte, et
- retrait de ladite portion des caractères latins de la mémoire-tampon.

5. Méthode selon la revendication 1, **caractérisée en ce que** ladite base de données (120) comprend une base de données de translittération des voyelles (120a), une base de données de translittération des consonnes (120b) et une base de données de translittération des mots (120d) et où ladite étape de recherche comprend les étapes de :
- recherche desdites entrées reçues dans la base de données de translittération des voyelles (120a) et dans la base de données de translittération des consonnes (120b),
- placement dudit caractère non latin particulier correspondant aux dites entrées reçues dans ledit document de texte en réponse à la découverte dudit caractère pendant ladite étape de recherche, et
- recherche desdites entrées reçues dans la base de données de translittération des mots (120d) en réponse à la non découverte dudit caractère pendant l'étape de recherche.

6. Méthode selon la revendication 1, **caractérisée en ce que** lesdits caractères non latins sont ceux utilisés dans une langue choisie dans le groupe formé par l'hindi, le gujarati et le marathi.

7. Système de translittération par ordinateur pour écrire des documents de texte avec un jeu de caractères non latins comprenant une pluralité de caractères non latins, ledit système comprenant un clavier (105) comprenant une pluralité de touches afin de fournir des entrées audit système, dans lequel chacune des pluralités de touches correspond à un caractère latin particulier, **caractérisé par** :
- une base de données (120) pour stocker chacune desdites pluralités de jeux d'un ou plusieurs caractères latins, chacune desdites pluralités de jeux d'un ou plusieurs caractères latins correspondant à une desdites pluralités de caractères non latins et où chacune desdites pluralités de jeux d'un ou plusieurs caractères latins représente phonétiquement ledit caractère non latin correspondant,
- un programme d'application (115) à l'intérieur dudit système de translittération pour rechercher dans ladite base de données (120) lesdites entrées reçues, et
- des moyens de sortie pour traiter ledit caractère non latin correspondant aux dites entrées reçues en réponse à la découverte desdits caractères latins représentés par lesdites entrées reçues sont trouvés dans ladite base de données (120).

8. Système de translittération par ordinateur selon la revendication 7, **caractérisé en ce que** ledit clavier (105) est adapté à recevoir des frappes correspondant à des caractères latins particuliers et comprenant de plus une mémoire-tampon pour stocker les caractères latins particuliers correspondant aux dites frappes.

9. Système selon la revendication 8, **caractérisé en ce que** ledit programme d'application (115) comprend des moyens pour rechercher dans ladite base de données (120) lesdits caractères latins particuliers placés dans ladite mémoire-tampon, en réponse à l'apport par ledit clavier (105) d'une frappe correspondant à une touche curseur.

10. Système selon la revendication 7, **caractérisé en ce que** ladite base de données (120) comprend une base de données de translittération des voyelles (120a), une base de données de translittération des consonnes (120b) et une base de données de translittération des mots (120d).

11. Système selon la revendication 7, **caractérisé en ce que** les moyens de sortie comprennent un moniteur (88).

12. Système selon la revendication 7, **caractérisé en ce que** lesdits moyens de sortie comprennent une interface utilisateur graphique (125) affichable sur un moniteur (88).

13. Système selon la revendication 7, **caractérisé en ce que** ledit clavier (105) et lesdits moyens de sortie forment une portion d'un ordinateur client (58) et ledit programme d'application (115) est stocké sur un serveur (505) qui est connecté audit ordinateur client (58) par un moyen de communication (510).

14. Système selon la revendication 13, **caractérisé en ce que** ladite base de données (120) est stockée sur un serveur de base de données (605) et dans lequel ledit ordinateur client (58), ledit serveur (505) et ledit serveur de base de données (605) sont interconnectés par ledit moyen de communication (510).

15. Article manufacturé comprenant un moyen utilisable par ordinateur ayant des moyens de codage lisibles par ordinateur mis en oeuvre sur lui pour écrire un document de texte avec un jeu de caractères non latins comprenant une pluralité de caractères non latins dans un système informatique ayant un moniteur (88) et de la mémoire, les moyens de codage de programme lisibles par ordinateur dans ledit article manufacturé comprenant des moyens de codage du programme lisible par ordinateur pour la réception d'entrées à partir d'un clavier (105) comprenant une pluralité de touches, où chacune desdites pluralités de touches correspond à un caractère latin particulier et **caractérisé par** les étapes de :
- recherche dans la base de données (120) desdites entrées reçues, ladite base de données (120) stockant chacune desdites pluralités de caractères non latins et une pluralité de jeux d'un ou plusieurs caractères latins, chacune desdites pluralités de jeux d'un ou plusieurs caractères latins correspondant à une desdites pluralités de caractères non latins en particulier, où chacune desdites pluralités de jeux d'un ou plusieurs caractères latins représente phonétiquement ledit caractère non latin particulier correspondant, et
- placement dudit caractère non latin particulier correspondant aux dites entrées reçues dans ledit document de texte en réponse à la découverte desdites entrées reçues dans ladite base de données (120).

16. Article manufacturé selon la revendication 15, **caractérisé en ce que** ledit code de programme lisible par ordinateur comprend également des moyens de :
- réception des frappes à partir dudit clavier (105), et
- placement desdits caractères latins particuliers correspondants aux dites frappes dans une mémoire-tampon en réponse aux dites frappes correspondant aux caractères latins particuliers associés.

17. Article manufacturé selon la revendication 16, dans lequel lesdits moyens de codage de programme lisible par ordinateur pour les recherches comprennent en plus des moyens de codage de programme lisible par ordinateur pour :
rechercher dans ladite base de données (120) lesdits caractères latins placés dans ladite mémoire-tampon en réponse à la réception d'une frappe correspondant à une touche curseur par lesdits moyens de réception.

18. Article manufacturé selon la revendication 16, dans lequel ledit code de programme lisible par ordinateur comprend de plus des moyens pour :
- rechercher dans ladite base de données (120) une desdites pluralités de jeux en particulier où ladite pluralité de jeux correspond à une portion desdits caractères latins placés dans ladite mémoire-tampon en réponse à la non découverte lesdites entrées reçues dans ladite base de données (120),
- placer ledit caractère non latin particulier correspondant audit jeu particulier dans le document de texte, et
- retirer ladite portion des caractères latins de ladite mémoire-tampon.

19. Article manufacturé selon la revendication 15, dans lequel ladite base de données (120) comprend une base de données de translittération des voyelles (120a), une base de données de translittération des consonnes (120b) et une base de données de translittération des mots (120d) et où lesdits moyens de codage de programme lisibles par ordinateur pour les recherches comprennent de plus des moyens de codage de programme lisibles par ordinateur pour :
- rechercher lesdites entrées reçues dans la base de données de translittération des voyelles (120a) et dans la une base de données de translittération des consonnes (120b),
- placer ledit caractère non latin particulier correspondant aux dites entrées reçues dans ledit document de texte en réponse à la découverte dudit caractère pendant l'étape de recherche, et
- rechercher lesdites entrées reçues dans la base de données de translittération des mots (120d) en réponse à la non découverte dudit caractère pendant l'étape de recherche.

20. Article manufacturé selon la revendication 15, **caractérisé en ce que** lesdits caractères non latins sont ceux utilisés dans une langue choisie dans le groupe formé par l'hindi, le gujarati et le marathi.
